# EUROPEAN PATENT APPLICATION

(11) **EP 1 605 414 A1**
(43) Date of publication of application: **14.12.2005**
(21) Application number: 05076313.5
(22) Date of filing: 06.06.2005
(51) Int. Cl.: G07F 7/00

(54) **Pre-payment system for taxicab services**

(30) Priority: 11.06.2004 ES 200401517
(71) Applicant: Interfacom, S.A., 08037 Barcelona (ES)
(72) Inventor: Tomàs Moner, Pere, E-08018 Barcelona (ES)
(74) Representative: Canela Giménez, Teresa

(57) **Abstract**

Pre-payment system for taxicab services comprising:
- one or several pre-payment service-hiring terminals (1) that make it possible for the user to hire a taxicab trip upon display on said terminal (1) of the fares for each of the possible drop-off zones that originate at a point of origin, said terminal (1) making it possible to make payment of the fare for the requested service, having means for communicating with a central control of the system (4) so as to send data concerning the hired taxicab service and payment thereof and being capable of printing out receipts.
- anti-fraud cards (2) that are a receipt for the service hired by the customer, such anti-fraud cards (2) being obtained from said pre-payment service-hiring terminal (1) and being encoded with the data concerning the hired service.
- a processing module (3) located in every taxicab that makes it possible to read the payment and the hired trip that are both encoded in said anti-fraud card (2), said processing module (3) also allowing wireless communication with a central control of the system (4) for sending a signal indicating end of service and for receiving notification of payment to the commercial account of the taxicab driver in respect of the trip completed; said processing module (3) providing means for printing-out service receipts both for the customer and the taxicab driver; and said processing module (3) being provided with means for entering data manually.
- a central control of the system (4) that automatically records and validates payments made by users in said system terminal (1), and also validates the end of service transmissions that are sent by said processing module (3) from the taxicab, and carries out the accounting operations and transactions in respect of the service rendered under the parameters configured in the system.

## Description

### FIELD OF THE INVENTION

The present invention describes a pre-payment system for taxicab services whereby users of these services can effect payment of the fares for previously selected trips in sales terminals.

### PRIOR ART

It is known that certain zones, that are special for professional taxicab drivers such as passenger terminals, like train and bus stations, airports and the like, have their own specific regulations owing to both the volume of the taxicab services demanded by users and their particular geographical location in areas that are sometimes far from the main city centre. Said special zones have their own specific regulations that are to be observed by professional taxicab drivers.

Automatic fare systems of the current taximeters cope poorly with this kind of services that usually have their own rules and fares or even exclusive exploitation licences for certain professional taxicab drivers who are granted special authorizations, when applicable, for performing such services.

Additionally, the authorities that regulate said professional practices require detailed information regarding taxicab trips, fares and destinations not only for tax control but also in order to compile statistical data on the flow of passengers leaving from that particular zone.

As for taxicab customers, those who request taxicab services from one of said special zones are ordinarily unaware of the cost, sometimes not even the approximate cost, of a particular taxicab trip. For this reason they can become the unsuspecting victims of certain abusive professional taxicab drivers acting fraudulently.

The main object of the present invention is to provide a pre-payment system for taxicab services originating at said special zones, which system can make it possible the incorporation of the fare regulations for those services originating at said specific zones.

Additionally, another object of the present invention is to provide a means of combating fraud in said type of services, thereby avoiding at the same time abusive and uncontrolled charging for said taxicab trips from both unscrupulous professional taxicab drivers and even unaccredited taxicab drivers.

A further object attained by the present invention is to permit taxicab customers to know beforehand the exact cost of a desired taxicab trip.

A further advantage and object attained by the present invention is to create a system for validating payments that makes it possible for both customers to pay fares by way of any given means and, for professional taxicab drivers to certify the accuracy of said electronically validated payments, being those fares credited to the taxicab driver's commercial account by the central control of the system of the present invention.

Still a further advantage inherent to the invention is that it makes it possible to avoid operations involving ready money with taxicab drivers, thus lessening the inconveniences of having to provide change and reducing the amount of ready money that is to be kept by taxi drivers, thereby minimizing theft risks.

Still a further advantage of the present invention is to provide means of control and, both accounting and statistic assessment of the fares and data concerning completed taxicab trips.

These and other advantages of the present invention will become apparent throughout the description of present specification.

### BRIEF DESCRIPTION OF THE INVENTION

The present invention describes a pre-payment system for taxicab services leaving from particular locations that makes it possible to set fares and specific rules for said locations and accepts any type of means of payment thanks to a service-hiring terminal which provides an anti-fraud voucher of the hired service that can be validated by the taxicab driver in his/her own vehicle, so that the fare can be credited to his/her commercial account under the conditions prescribed by the pertinent authorities.

In brief, the system comprises a vandal-proof service-hiring terminal preferably located in areas frequented by passengers of said zones with special regulations, such as train and bus terminals, airports and the like.

Customers select through conventional means their destinations, receive information on the selected fare of the service via the terminal and, upon payment of said service by any conventional means, receive an anti-fraud voucher, such as an encoded magnetic stripe card or any other known means. Customers can additionally receive a receipt for the payment effected.

Once the customer gets on the taxicab, the taxicab driver verifies the destination requested and the fare by using the voucher and by reading said means of payment, since there is provided a means of reading said cards in the very taximeter or in the proximity thereof.

Upon completion of the service, the taxicab driver sends a signal or notification of end of service, by way of a wireless communications module, to the central control of the system that thereafter proceeds with the payment of the fare for the service rendered to the taxicab's current account in accordance with the regulations laid down by the authorities for said pre-payment system for taxicab services in said specific and special zone.

### BRIEF DESCRIPTION OF THE DRAWINGS

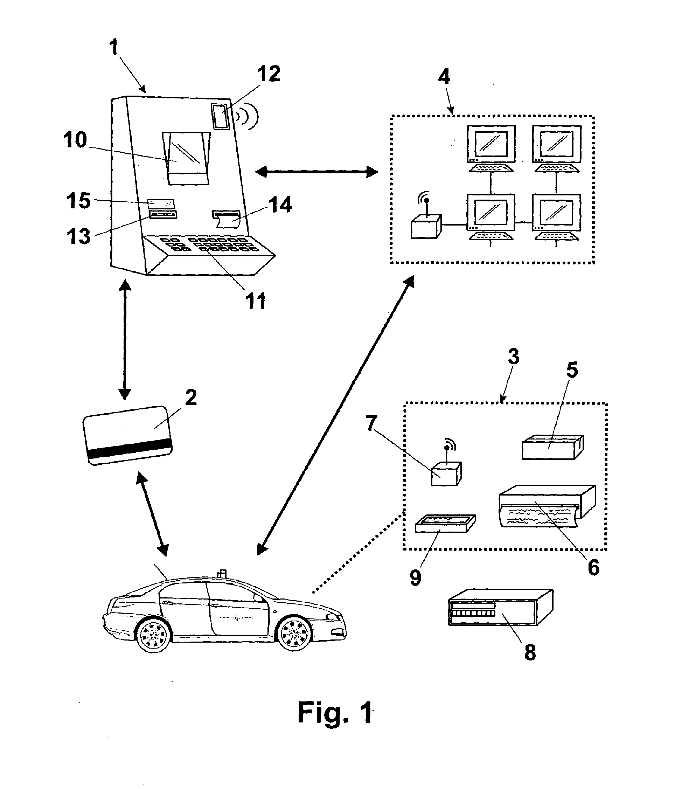

A sheet of drawings is accompanied for a better comprehension of the present invention, by way of a merely illustrative and non-limiting example of same, in which figure 1 diagrammatically represents the different elements intervening in the system of the invention.

### DETAILED EXPLANATION OF THE INVENTION

The present invention consists of a pre-payment system for taxicab services leaving from particular locations that makes it possible to set fares and specific rules for said locations, that accepts any kind of means of payment thanks to a pre-payment service-hiring terminal (1), that issues a voucher or anti-fraud card (2) for the hired service that permits the validation thereof by the taxicab driver in his/her very vehicle through electronic means incorporated into or in the proximity of the taximeter (8), such that the fare can be credited to the taxicab driver's commercial account in accordance with the conditions stipulated by the pertinent authorities.

It is habitually those authorities that manage said particular locations such as, airports, transport terminals, etc, who set the prices for the different taxicab services leaving from said zones.

Customers make payment of the fares before getting on the taxicabs, either in cash, by credit card or by any other means of payment. Taxicab drivers get paid by the central control of the system (4) through any mutually agreed upon means, usually through automatic electronic transactions.

The service-hiring pre-payment terminal (1) makes it possible for customers to pay for the desired taxicab trip beforehand. Said terminal (1) is contained in a vandal-proof box that has to include:
- A screen (10), which can be tactile
- A keyboard (11)
- A charging module (13): with the possibility of charging in cash, a magnetic stripe card reader, a reader for pin-reading EMV chip cards, etc.
- A recording module (15) for anti-fraud cards (2)
- A printer (14), for instance, a thermal-type printer
- A communications module (12) for communications between said terminal (1) and the processing central office (4) of the system of the invention. The main embodiment contemplates GPRS communications due to its low cost.

Users in a standard instance of use of the pre-payment system terminal (1) of the invention easily select their destination thanks to the friendly interface with which said terminal (1) is configured. The terminal (1) screen displays, apart from the taxicab pick-up and drop-off locations, the fare to be paid, after having taken into account: the drop-off zone and, date and time of the service.

The system is prepared for allowing any known mode of payment for that purpose. Cash, magnetic stripe card payments, EMV card payments, mobile payment systems such as Mobipay (of Mobipay España, S.A.). The system can be adjusted to make it possible the use of any other currently known or future mode of payment without substantially altering the gist of the invention.

Upon payment of the service via the charging module (13) in said service-hiring (1) pre-payment terminal (1), service and payment data are sent to the central control of the system (4) through the communications module (12). Said central control of the system (4) records the service and payment data. Said communications module can, in a practical embodiment, utilise GPRS-type wireless communications.

The terminal (1) issues an encoded magnetic card (2) and, if requested by the customer, a payment voucher.

The pre-payment card (2) is encoded such that, once read by the appropriate taxicab reader, it provides information on the taxicab trip and the fare paid. In a preferred embodiment of the invention, said cards (2) are one-use cards to be kept by taxicab drivers as vouchers of the payments debited by the system for the services rendered.

The anti-fraud card (2) bears at least the following encoded data: the date and time when it was purchased, the pick-up and drop-off points for the service hired, the fare paid, the means of payment and the identification number of said card (2).

The invention includes a processing module (3) to be placed in the taxicab. Said module comprises an anti-fraud card reader (5), a printer (6), for instance a thermal printer, a wireless communications module (7) and a data terminal (9).

Said modules that comprise the processing module (3) can be independent modules or part of an interrelated and homogeneous assembly. Also, since there exist on the market a great many models of electronic digital taximeters (8) provided with data terminals, printers, card readers, etc., said processing module can take advantage of the already existing components and only those that the taxicab drivers do not have are to be added.

Furthermore, when required, one of the practical embodiments of the present invention contemplates a taximeter (8) of the electronic and digital type that includes among its components the whole processing module (3).

Both in the above case and when only some of the modules are added, these modules have to be properly connected with the remaining elements that comprise the above-described processing module (3) and have to be provided with the instructions that govern the present system, both for permitting communications and for issuing vouchers.

The preferred communications system between taxicab processing modules (3) and the central control of the system (4) is GPRS, although communication could be achieved via any alternative means of transmission without altering the gist of the invention.

The operational stages of the system of the present invention in its preferred embodiment and once the customer has got into the taxicab are as follows:
- the taxicab driver inquires about the drop-off address
- the taxicab drives swipes the pre-payment magnetic card (2) through the anti-fraud card reader (5)
- the data terminal (9), if appropriate, or the taximeter screen (8) in those taximeters adapted to internal utilization of the system, displays the name of the drop-off location, the fare paid, the date of purchase of the card, authorising or denying the service.

According to the system pre-payment cards (2) may be only valid for a predetermined period of time, if so specified.

Upon verification by the taxicab driver that the pre-payment card is valid for the customer's destination, the service is begun.

The invention, in accordance with the specific regulations of each location, makes provision for different outcomes if the card has not overcome the previous stage and, if for instance there is a discrepancy between the hired trip and the requested trip, this difference being possible to be offset, if so determined, by paying cash the extra money.

According to the system of the invention external signalling indicative of service may also change when taxicabs are driving by under the conditions of the system, for instance, by way of a special lighted sign or a specific fare number, it all in accordance with the regulations laid down by the appropriate authorities of each taxicab service zone.

Once the service has ended and the taxicab has reached the requested destination, passengers may receive a service receipt. Taxicab drivers keep said pre-payment cards (2) as vouchers for the services rendered and receive from the central control of the system (4) a receipt confirming that the service has been recorded and the appropriate service transactions have been performed.

Payment receipts received by customers may include taxicab details, cost of the service, start and finish date and time of the service, card number, pick-up and drop-off zone of the trip, number of the receipt or voucher.

As far as the transmission from the processing central office (4) is concerned, the communications module (7) of said processing module (3) sends a communication of payment for each service to the processing central office (4), said payment having to be confirmed by said processing central office. According to the invention, the reply from the central office may include: the card identification code, the fare, the taxicab that has rendered the service, date and time of payment at the terminal, start and finish date of the service, pick-up and drop-off zone of the service.

As stated above in the objects section of the invention, in a preferred embodiment service reports may be drawn up based on specific zones where the present system is used. For instance, one of said reports may refer to monthly trips made and offer detailed data on each service, such as, service number, taxicab number, drop-off zone, drop-off time and date, fare.

Said report may even be ordered according to different criteria, such as, date and time of the service, it can be grouped by taxicabs or by drop-off zones. Such report may offer the total number of services, including the number of services performed and total fare figures.

The system of the invention provides an automated means of payment for taxicab drivers, by crediting fare amounts to their commercial accounts, thereby trying to keep the time period elapsed between the service and the payment for such service as short as possible. The system of the invention may also provide a statement displaying both a detailed and a summarized account of the services originated at each of the special zones, such that taxicab drives can verify the accuracy of the credited amounts.

Such centralized system thanks to the processing central office (4) makes it possible the preparation of statistics on, for instance, the total number of services according to the drop-off destinations, hourly, monthly and yearly service distribution, etc.

Additionally, according to the system it is possible to export through digital means data concerning services that are subsequently processed by the authorities in charge of determining the specific location of such services, so that said authorities can automatedly incorporate said service data into their handling and analysis system.

It will be appreciated that, in the present case, any variation in detail that does not alter the substance of the invention is included in the subject-matter of the invention.

## Claims

1. Pre-payment system for taxicab services **characterized in that** it comprises:
- one or several pre-payment service-hiring terminals (1) that make it possible for the user to hire a taxicab trip upon display on said terminal (1) of the fares for each of the possible drop-off zones that originate at a point of origin, said terminal (1) making it possible to make payment of the fare for the requested service, having means for communicating with a central control of the system (4) so as to send data concerning the hired taxicab service and payment thereof and being capable of printing out receipts.
- anti-fraud cards (2) that are a receipt for the service hired by the customer, such anti-fraud cards (2) being obtained from said pre-payment service-hiring terminal (1) and being encoded with the data concerning the hired service.
- a processing module (3) located in every taxicab that makes it possible to read the payment and the hired trip that are both encoded in said anti-fraud card (2), said processing module (3) also allowing wireless communication with a central control of the system (4) for sending a signal indicating end of service and for receiving notification of payment to the commercial account of the taxicab driver in respect of the trip completed; said processing module (3) providing means for printing-out service receipts both for the customer and the taxicab driver; and said processing module (3) being provided with means for entering data manually.
- a central control of the system (4) that automatically records and validates payments made by users in said system terminal (1), and also validates the end of service transmissions that are sent by said processing module (3) from the taxicab, and carries out the accounting operations and transactions in respect of the service rendered under the parameters configured in the system.

2. Pre-payment system for taxicab services, according to claim 1, **characterized in that** said point of origin of the trips can be predetermined for each of said pre-payment service-hiring terminals (1) in accordance with the specific location of said terminals (1).

3. Pre-payment system for taxicab services, according to the previous claims, **characterized in that** special fares for the taxicab services may be established, said special fares being specific for a given pick-up point where said pre-payment service-hiring terminals (1), such as stations and airports, are located,

4. Pre-payment system for taxicab services, according to the previous claims, **characterized in that** said pre-payment service-hiring terminal (1) comprises at least a screen (10) for displaying information, a keyboard (11), and a communications module (12) capable of connecting with said processing central of the system (4), and having a charging module (13) that accepts different known modes of payment, a recording module (15) of said anti-fraud cards (2) and a printer (14).

5. Pre-payment system for taxicab services, according to the previous claims, **characterized in that** said screen (10) of said pre-payment service-hiring terminal (1) is a tactile screen.

6. Pre-payment system for taxicab services, according to the previous claims, **characterized in that** said communications module (12) of the pre-payment service-hiring terminal (1) uses GPRS.

7. Pre-payment system for taxicab services, according to the previous claims, **characterized in that** said charging module (13) of said pre-payment service-hiring terminal (1) makes it possible at least payment in cash, payment by magnetic stripe credit card, payment by pin-reading EMV chip cards, payment by any mobile payment system, such as the Mobipay system (of Mobipay España S.A.).

8. Pre-payment system for taxicab services, according to claims 1 to 3, **characterized in that** said anti-fraud card (2), confirming the service hired by the customer, holds encoded the data regarding the hired service and, at least, the pick-up and drop-off location, the date, the mode of payment and the fare.

9. Pre-payment system for taxicab services, according to claim 8, **characterized in that** said anti-fraud card (2) confirming the service hired by the customer, is an encoded magnetic stripe card.

10. Pre-payment system for taxicab services, according to claim 1 to 3, **characterized in that** said processing module (3) comprises a reading unit (5) for said anti-fraud cards (2), a printer (6), a terminal for entering data (9) and a wireless communications module (7) for communicating with the central control of the system (4).

11. Pre-payment system for taxicab services, according to claim 10, **characterized in that** every or just some of the parts comprising said processing module (3), such as, the wireless communications module (7), the terminal for entering data (9), the printer (6) or the reading unit (5) may be integrated into an electronic digital taximeter (8).

12. Pre-payment system for taxicab services, according to claims 10 and 11, **characterized in that** said wireless communications module (7) of said processing module (3) uses GPRS.

13. Pre-payment system for taxicab services, according to claims 10, 11 and 12, **characterized in that** said reading unit (5) of said processing module (3) is a magnetic stripe card reading unit.
